# EUROPEAN PATENT SPECIFICATION

(11) **EP 1 794 199 B1**
(45) Date of publication and mention of the grant of the patent: **13.01.2010**
(21) Application number: 05785253.5
(22) Date of filing: 16.09.2005
(51) Int. Cl.: C08F 20/16, G11B 7/24

(54) **PHOTOCURABLE RESIN COMPOSITION**
LICHTHÄRTBARE HARZZUSAMMENSETZUNG
FORMULATION DE RESINE PHOTODURCISSABLE

(30) Priority: 27.09.2004 JP 2004279256; 27.09.2004 JP 2004279255
(43) Date of publication of application: 13.06.2007
(73) Proprietor: Hitachi Chemical Co., Ltd., Shinjuku-ku, Tokyo 163-0449 (JP)
(72) Inventor: HAYASHI, Katsunori c/o Hitachi Chemical Co., Ltd., Chiba 290-8567 (JP); KOBAYASHI, Akihiro c/o Hitachi Chemical Co., Ltd., Chiba 290-8567 (JP); KAMEI, Junichi c/o Hitachi Chemical Co., Ltd., Chiba 290-8567 (JP)
(74) Representative: HOFFMANN EITLE
(86) International application number: PCT/JP2005/017554
(87) International publication number: WO 2006/035683

(56) References cited:
- DE-A1- 10 317 435
- JP-A- 09 125 012
- JP-A- 10 110 138
- JP-A- 62 081 378
- JP-A- 2000 186 253
- JP-A- 2004 275 064
- JP-A- 2004 352 881
- JP-A- 2005 082 716
- JP-A- 2005 113 109
- JP-A- 2005 272 792
- US-A- 4 258 204

## Description

### TECHNICAL FIELD

The present invention relates to a resin composition that can be used favorably in a coating material or an adhesive, wherein the resin composition is of low skin irritancy, and exhibits favorable curability using radiation such as ultraviolet light or an electron beam.

The present invention also relates to a resin composition that can be used favorably within an optical disk, wherein the resin composition exhibits minimal coloration, and is capable of inhibiting metallic corrosion of metal layers, as well as an optical disk that comprises a layer comprising such a resin composition.

### BACKGROUND ART

(Meth)acrylate esters (hereafter the term (meth)acrylate ester is used to refer to acrylate esters and/or methacrylate esters) are widely used as reactive diluents for ultraviolet-curable resins or electron beam-curable resins in fields such as coating materials, adhesives, and photosensitive films. The production of these (meth)acrylate esters has long used a method in which an alcohol and a (meth)acrylic acid derivative are subjected to an esterification reaction in the presence of a sulfonic acid-based catalyst.

Because reaction product produced in this manner contains residual quantities of the sulfonic acid-based catalyst and unreacted materials, the product is usually purified by conducting a neutralization treatment. However, during the esterification reaction, addition reactions between the sulfonic acid-based catalyst and the (meth)acrylate ester produce catalyst derivatives, and these derivatives have proved difficult to remove by simply conducting a neutralization treatment. (Meth)acrylate esters from which these sulfonic acid-based catalyst derivatives have not been removed, and resin compositions containing such (meth)acrylate esters, tend to be prone to coloration.

Examples of methods that have been proposed to resolve this problem include purification by vacuum distillation (see Japanese Laid-Open Publication No. Sho 51-54515), removal of the colored matter by adsorption with activated carbon or activated white clay (see Japanese Laid-Open Publication No. Sho 59-219252), and a method in which a weakly basic salt comprising potassium or sodium is added following completion of the reaction, at the time of removal of the organic solvent (see Japanese Laid-Open Publication No. Hei 11-263779).

However, although the method disclosed in Japanese Laid-Open Publication No. Sho 51-54515 is suited to the purification of (meth)acrylate esters with comparatively low boiling points, problems arise for (meth)acrylate esters with higher boiling points, including the danger of polymerization.

The method disclosed in Japanese Laid-Open Publication No. Sho 59-219252 also suffers from various problems, including the complexity of the process and the significant length of time required for the subsequent removal of the activated carbon or the like.

In the method disclosed in Japanese Laid-Open Publication No. Hei 11-263779, a problem arises in that foreign substances can be generated that are insoluble in the solvent or reactive diluent, examples of which include aromatic hydrocarbons such as toluene and xylene, as well as esters such as ethyl acetate and methyl methacrylate.

Another method for decomposing and removing sulfonic acid-based catalyst derivatives is disclosed in Japanese Laid-Open Publication No. Hei 6-219991, which proposes conducting a post-treatment with an amine following the neutralization treatment, in order to obtain a (meth)acrylate ester with a significantly reduced quantity of catalyst derivatives. In addition, Japanese Laid-Open Publication No. 2001-122820 discloses a method in which catalyst derivatives are removed by adding a weakly basic salt in the presence of a water-soluble solvent and water. However, both of these methods have significant drawbacks in terms of industrial application, including the generation of large quantities of wastewater during production of the product, and the lengthy time periods required for conducting the treatments.

Moreover, in the case of applications such as coating materials and adhesives, the skin irritancy problems associated with (meth)acrylate esters from which sulfonic acid-based catalyst derivatives have not been removed have become very apparent in recent years. A number of methods have been disclosed which attempt to resolve these problems, either by increasing the molecular weight of the (meth)acrylate ester, or by using methacrylate esters which exhibit comparatively low skin irritancy. However, both methods suffer from a variety of problems, including an increase in viscosity that makes handling difficult, and a slow photopolymerization rate.

In addition, in the case of adhesive applications, it has become very clear in recent years that when a (meth)acrylate ester from which sulfonic acid-based catalyst derivatives have not been removed, or a resin composition containing such a (meth)acrylate ester, is brought into contact with a metal, corrosion occurs within the contact region.

The use of (meth)acrylate esters as protective film-forming agents for preventing the corrosion of the recording layers of optical disks (such as DVD and CD) is well known (for example, see Japanese Laid-Open Publication No. Hei 7-126577, Japanese Laid-Open Publication No. Hei 9-69239, and Japanese Laid-Open Publication No. Hei 10-1659). However, these protective layers are used mainly to prevent the recording layer from coming in contact with the external atmosphere, and particularly conditions of high temperature and humidity, and no mention is made of preventing corrosion caused by the use of a (meth)acrylate ester from which sulfonic acid-based catalyst derivatives have not been removed, or a resin composition containing such a (meth)acrylate ester.

Japanese Laid-Open Publication No. Hei 7-37284 discloses a method in which small quantities of sulfur and phosphorus are incorporated into components such as photostabilizers, antistatic agents, and surfactants and the like, whereas Japanese Patent No. 3,289,125 discloses a method in which corrosion components derived from a polymerization initiator are trapped by ion exchange. However, neither method makes any mention of (meth)acrylate esters.

DE 103 174 35 A describes a manufacturing a method of acrylate esters by means of a transesterification reaction using a zeolith as the catalyst system.

US 4, 258, 204 describes the preparation of acrylate esters from an acrylic acid halide as the starting material without the use of a catalyst.

Neither of these documents mentions a (meth)acrylate ester containing a tricyclo[5.2.1.0^{2,6}]decenyl group.

### DISCLOSURE OF INVENTION

The inventors of the present invention discovered that a (meth)acrylate ester with a sulfur content no higher than a specified quantity, and particularly a (meth)acrylate ester obtained by a transesterification reaction using a neutral catalyst, exhibited minimal coloration and low skin irritancy, and that a resin composition using such a (meth)acrylate ester was capable of inhibiting metallic corrosion.

A first aspect of the present invention provides a manufacturing method of a (meth)acrylate ester with a sulfur content of no more than 5 ppm, comprising:
preparing an alcohol and a lower (meth)acrylate ester; and
subjecting the alcohol and the lower (meth)acrylate ester to a transesterification reaction in the presence of a non-sulfonic acid-based catalyst,
wherein the alcohol comprises a tricyclo[5.2.1.0^{2,6}] decenyl group. Here, the term (meth)acrylate ester refers to either an acrylate ester ot a methacrylate ester.

A second aspect of the present invention provides a (meth)acrylate ester with a sulfur content of no more than 5 ppm, produced by the manufacturing method according to claim 1 and containing a tricyclo[5.2.1.0^{2,6}]decenyl group.

A third aspect of the present invention provides a photocurable resin composition comprising the (meth)acrylate ester according to the above second aspect.

A fourth aspect of the present invention provides a use of the photocurable resin composition according to the above third aspect as a coating material or an adhesive.

A fifth aspect of the present invention provides an optical disk comprising an optical disk substrate, a metal layer, and an adhesive layer or a protective layer formed on top of the metal layer using the photocurable resin composition according to the above fourth aspect.

Preferred embodiments will become apparent from following description and from the attached dependent claims.

### BEST MODE FOR CARRYING OUT THE INVENTION

A photocurable resin composition according to the present invention (for example, a photocurable resin composition for a coating material or adhesive) exhibits minimal coloration and low skin irritancy, and is consequently very useful as a coating or adhesive for all manner of substrates. In addition, a photocurable resin composition according to the present invention (for example, a resin composition for an optical disk) exhibits minimal coloration and causes no metallic corrosion, and is consequently ideal as a protective layer or adhesive layer formed on top of the recording layer or reflective layer of an optical disk.

A photocurable resin composition of the present invention uses a (meth)acrylate ester with a sulfur content of no more than 5 ppm as mentioned hereinabove. In (meth)acrylate esters in which the sulfur content exceeds 5 ppm, coloration of the resin composition becomes problematic, skin irritancy increases, and corrosion of metal layers such as the recording layer or reflective layer of an optical disk occurs more readily.

The sulfur content can be measured by combustion, followed by coulometric titration, which represents the most common method for determining the sulfur fraction.

Production of the above-mentioned (meth)acrylate ester via a transesterification reaction of an alcohol and a lower (meth)acrylate ester in the presence of a non-sulfonic acid-based catalyst yields a product of particularly minimal coloration, which displays a reduced likelihood of skin irritancy or metal corrosion.

As follows is a detailed description of this production method. First, an alcohol and a lower (meth)acrylate ester are subjected to a transesterification reaction in the presence of a non-sulfonic acid-based catalyst. During this reaction, the use of an excess of the lower (meth)acrylate ester relative to the alcohol enables the reaction to be completed within a shorter time frame and improves the reaction conversion rate.

A quantity of 2.5 to 20 mols of the lower (meth)acrylate ester is preferably used for every 1 mol of the alcohol. If the quantity of the lower (meth)acrylate ester is too small, then the reaction slows, and the likelihood of unreacted residual alcohol increases. In contrast, if the quantity of the lower (meth)acrylate ester is too large, then the productivity deteriorates, and a long time is required for the process of recovering the excess lower (meth)acrylate ester remaining at the completion of the reaction.

The alcohol used in the transesterification reaction contains a tricyclo[5.2.1.0^{2,6}]decenyl group, and suitable examples include tricyclo[5.2.1.0^{2,6}]decenol,
tricyclo[5.2.1.0^{2,6}]decenyloxyethanol,
tricyclo[5.2.1.0^{2,6}]decenyloxypropanol
tricyclo[5.2.1.0^{2,6}]decenyloxyethoxyethanol.

Suitable examples of the non-sulfonic acid-based catalyst used in the transesterification reaction include alkali metal hydroxides such as lithium hydroxide, sodium hydroxide, and potassium hydroxide; alkali metal carbonates such as lithium carbonate, sodium carbonate, and potassium carbonate; alkali metal alkoxides such as lithium methoxide, sodium methoxide, sodium ethoxide, and potassium t-butoxide; alkali metal amides such as lithium amide, sodium amide, and potassium amide; and C₁ to C₄ alkyl titanates such as tetramethyl titanate, tetraethyl titanate, tetrapropyl titanate, tetraisopropyl titanate, and tetrabutyl titanate. Of these catalysts, those which, through the addition of water, are able to be extracted into an aqueous layer and subsequently removed from the system, namely, the alkali metal hydroxides, alkali metal carbonates, alkali metal alkoxides, and C₁ to C₄ alkyl titanates, are preferred, and from the viewpoint of handling of the catalyst, C₁ to C₄ alkyl titanates are particularly desirable.

The quantity used of the catalyst is typically within a range from 0.01 to 5.0 parts by weight per 100 parts by weight of the combination of the lower (meth)acrylate ester and the alcohol. If the quantity of the catalyst is too small then the progress of the reaction slows, whereas there are no particular advantages if the quantity exceeds the above range, and the addition simply becomes uneconomic.

In those cases where a C₁ to C₄ alkyl titanate is used as the catalyst, because the catalyst is prone to a loss of activity if there is a high water content within the reaction system, the reaction mixture is preferably heated and refluxed to reduce the water content in the system prior to the addition of the catalyst, or an alternative method is used to ensure minimal water incorporation within the reaction system.

Examples of the lower (meth)acrylate ester used in the transesterification reaction include methyl (meth)acrylate, ethyl (meth)acrylate, propyl (meth)acrylate, and butyl (meth)acrylate.

In the production method described above, a conventional polymerization inhibitor can also be used. Examples of this polymerization inhibitor include phenols such as hydroquinone and hydroquinone monomethyl ether; phenothiazine; copper salts such as copper dibutyldithiocarbamate; manganese salts such as manganese acetate; and N-oxyl compounds such as nitro compounds, nitroso compounds, and 4-hydroxy-2,2,6,6-tetramethylpiperidinoxyl. The quantity added of this polymerization inhibitor is preferably within a range from 0 to 0.1% by weight relative to the quantity of the produced (meth)acrylate ester. If the quantity of the inhibitor is too large, then the aforementioned type of coloration caused by additives may become problematic.

In the production method described above, a small quantity of molecular oxygen is preferably blown into the reaction system during reaction to inhibit polymerization of the reaction liquid. This molecular oxygen is preferably used in a diluted form, and the use of air is ideal. Furthermore, blowing molecular oxygen into the system is also beneficial in terms of inhibiting the polymerization of lower (meth)acrylate ester that has vaporized, and either exists in gaseous form, or has condensed on the upper portions of the vessel walls. The quantity of molecular oxygen used is affected by factors such as the shape of the polymerization vessel and the level of agitation used, but is typically within a range from 5 to 500 ml/minute (25 to 2,500 ml/minute of air) per 1 mol of polyoxyalkylene glycol. If the quantity of oxygen is too low, then the polymerization inhibiting effect is inadequate, whereas if the quantity is too large, the effect of the oxygen flow in forcing the lower (meth)acrylate ester out of the system tends to strengthen, which increases the danger of significant loss of the lower (meth)acrylate ester.

A suitable solvent can also be used during the transesterification reaction, provided the solvent is inert and takes no part in the reaction. Examples of suitable solvents include hydrocarbons such as benzene, toluene, xylene, hexane, heptane, octane, isooctane, and cyclohexane, as well as ethers such as dioxane.

The transesterification reaction is preferably conducted at a temperature of 60 to 130°C, either at normal pressure or under reduced pressure. If the pressure is too low then the reaction rate falls, whereas overly high pressures can cause coloration or polymerization of the raw material lower (meth)acrylate ester and the product (meth)acrylate ester.

The apparatus for the transesterification reaction can use a typical apparatus used for producing a (meth)acrylate ester by a transesterification reaction of a lower (meth)acrylate ester and a raw material alcohol. In this apparatus, in order to increase the conversion rate of the raw material alcohol, azeotropic distillation of by-product lower alcohols with either the raw material lower (meth)acrylate ester or the solvent is conducted, thereby enabling the synthesis to proceed while these by-product lower alcohols are removed from the system. Accordingly, the reaction apparatus typically uses a batch reaction vessel fitted with a fractionating column.

Following completion of the recovery of any excess reaction solvent, any foreign matter and added adsorbents are removed by filtration. This filtration may use either pressure filtration or reduced pressure filtration. In order to prevent undue loading of the filter, diatomaceous earth may be used as a filtration assistant.

The (meth)acrylate ester used in a photocurable resin composition of the present invention is a (meth)acrylate containing a tricyclo[5.2.1.0^{2,6}]decenyl group (a dicyclopentenyl group) and is advantageous in terms of the coating characteristics (the curability, hardness, and adhesion to substrates). In addition, in those cases where this photocurable resin composition is used as a resin composition for an optical disk, the use of a (meth)acrylate containing a tricyclo[5.2.1.0^{2,6}]decenyl group (a dicyclopentenyl group) is advantageous in terms of improving the adhesion with the disk substrate, and the weather resistance of the formed adhesive layer or protective layer.

A resin composition comprising a (meth)acrylate ester obtained in the manner described above may also include at least one oligomer selected from a group consisting of epoxy (meth)acrylate esters, urethane (meth)acrylate esters, and polyester (meth)acrylate esters, in addition to the (meth)acrylate ester. In those cases where an oligomer is added to the composition, the blend quantity of the oligomer preferably accounts for 40 to 95 parts by weight, and even more preferably from 50 to 90 parts by weight, of each 100 parts by weight of the resin composition.

Examples of suitable epoxy (meth)acrylate esters include compounds obtained by reacting an epoxy resin with (meth)acrylic acid. Examples of the epoxy resin include bisphenol epoxy resins such as bisphenol A epoxy resins and bisphenol F epoxy resins; novolak epoxy resins such as phenol-novolak epoxy resins and cresol-novolak epoxy resins; and aliphatic epoxy resins such as hexanediol diglycidyl ether, glycerol diglycidyl ether, and trimethylolpropane triglycidyl ether.

Suitable urethane (meth)acrylate esters include compounds obtained by reacting a polyol such as ethylene glycol, propylene glycol, 1,3-butylene glycol, neopentyl glycol, 1,6-hexanediol, polypropylene glycol, bisphenol A ethylene oxide adduct, polytetramethylene glycol, trimethylolpropane, polyester polyol, or polycarbonate polyol, an organic polyisocyanate such as an aromatic diisocyanate, aromatic aliphatic diisocyanate, aliphatic diisocyanate, or cyclic aliphatic diisocyanate, and a hydroxy group-containing (meth)acrylate such as 2-hydroxyethyl (meth)acrylate, 2-hydroxypropyl (meth)acrylate, 4-hydroxybutyl (meth)acrylate, trimethylolpropane di(meth)acrylate, glycerol di(meth)acrylate, pentaerythritol tri(meth)acrylate, or dipentaerythritol penta(meth)acrylate.

Suitable polyester (meth)acrylate esters include materials obtained by reacting a polyester polyol with (meth)acrylic acid. A polyester polyol can be obtained by reacting an acid such as succinic anhydride, adipic acid, phthalic anhydride, or tetrahydrophthalic anhydride, with an alcohol such as ethylene glycol, propylene glycol, neopentyl glycol, 1,6-hexanediol, or trimethylolpropane.

In addition to the (meth)acrylate ester and oligomers described above, the photocurable resin composition preferably also comprises a photopolymerization initiator in order to enable more efficient curing of the resin composition. Specific examples include benzophenone, 4,4-bis(diethylamino)benzophenone, 2,4,6-trimethylbenzophenone, methyl ortho-benzoylbenzoate, 4-phenylbenzophenone, t-butylanthraquinone, 2-ethylanthraquinone, diethoxyacetophenone, 2-hydroxy-2-methyl-1-phenylpropan-1-one, benzyl dimethyl ketal, 1-hydroxycyclohexyl phenyl ketone, benzoin methyl ether, benzoin ethyl ether, benzoin isopropyl ether, benzoin isobutyl ether, and methyl benzoyl formate, as well as photosensitizers such as methyl 4-dimethylaminobenzoate, ethyl 4-dimethylaminobenzoate, amyl 4-dimethylaminobenzoate, and 4-dimethylaminoacetophenone.

These photopolymerization initiators can be used either alone, or in combinations of two or more different compounds.

Although there are no particular restrictions on the blend ratio of the photopolymerization initiator within the photocurable resin composition, from the viewpoints of achieving a favorable curing rate and favorable properties for the formed film, a quantity of 0.01 to 10 parts by weight per 100 parts by weight of the composition is preferred.

Other conventional additives may also be added to the photocurable resin composition, including lubricants, leveling agents, antioxidants, photostabilizers, ultraviolet absorbers, polymerization inhibitors, silane coupling agents, and organic solvents.

The photocurable resin composition can be cured using normal methods, by irradiating the composition with ultraviolet light, an electron beam, or a visible light laser or the like. Specifically, the curing by irradiation with an energized beam of ultraviolet light or the like is preferably conducted by irradiation with ultraviolet light from a low-pressure or high-pressure mercury lamp, a metal halide lamp, or a xenon lamp or the like. Lamps for which the energy intensity is strong within a range from 350 to 450 nm are particularly desirable as the light source.

This photocurable resin composition exhibits minimal coloration and low skin irritancy, and can therefore be used favorably as a coating material or an adhesive. Specifically, the composition is ideal as a coating material or adhesive for a wide variety of different substrates, including polycarbonate, polymethylmethacrylate, acrylonitrile-butadiene rubber, timber, and stone.

In addition, because the photocurable resin composition has excellent transparency with minimal coloration, and significantly suppressed levels of metallic corrosion, it is also ideal as an adhesive layer or protective layer formed on the metal layer of an optical disk.

An optical disk according to the present invention comprises an optical disk substrate, a metal layer, and an adhesive layer or protective layer formed on top of the metal layer using a photocurable resin composition (resin composition for an optical disk) according to the present invention.

There are no particular restrictions on the method of producing the optical disk, and one suitable method involves forming a recording layer or a reflective layer (a metal layer), such as a sputtered metal film, on top of an optical disk substrate (such as a polycarbonate resin or an amorphous polyolefin-based resin), subsequently using an application device such as a roll coater, spin coater, or screen printing device to apply the photocurable resin composition to the top of the metal layer, in sufficient quantity to generate a dried coating film of, for example, 1 to 50 µm, and then curing the composition by irradiation with ultraviolet light, thereby forming a protective layer and/or adhesive layer for the optical disk. With the exception of using this protective and/or adhesive layer, the optical disk can be produced using normal methods.

The thus obtained optical disk exhibits excellent transparency, with minimal coloration, and significantly suppressed levels of metallic corrosion.

### EXAMPLES

As follows is a more detailed description of the present invention based on a series of examples.

### <Example 1>

A 1 liter flask fitted with a stirrer, a thermometer, an air inlet tube, and a fractionating column (15 stages) was charged with 194 g (1.0 mols) of dicyclopentenyloxyethanol (hereafter abbreviated as DOE), 500 g (4.0 mols) of ethyl acrylate, and 0.13 g of hydroquinone monomethyl ether, and the mixture was heated under reflux at atmospheric pressure, while dry air was blown into the system at a flow rate of 100 ml/minute, thereby removing moisture from the system. Subsequently, 3.0 g of tetraisopropyl titanate was added, and a transesterification reaction was conducted. Initially, the reaction mixture was heated under reflux, and the head temperature at the top of the fractionating column was close to the 100°C that is the boiling point of ethyl acrylate, but as the reaction progressed, the column head temperature approached the boiling point of the azeotropic mixture of ethanol and ethyl acrylate, and so the reflux ratio was adjusted so that the column head temperature fell within a range from 78 to 82°C, enabling the reaction to proceed while the ethanol was removed as an azeotrope with ethyl acrylate.

Approximately 3 hours after the addition of the catalyst, the column head temperature began to rise, and increased to approximately 90°C, and as a result the reflux ratio was also increased gradually until 15 was finally reached, and the reaction was then continued. Measurement by gas chromatography of the reaction rate within the reaction liquid 4 hours after the initiation of reaction revealed a reaction rate of 97%, so the reaction was halted at this point. The reaction liquid was cooled to 80°C, 100 g of a 17% saline solution was added to hydrolyze the catalyst, and once precipitation of the catalyst had been confirmed, stirring was halted and the reaction mixture was allowed to settle.

Subsequently, the supernatant oil layer was decanted into a 1 liter round-bottomed flask, excess methyl methacrylate was removed under reduced pressure using a rotary evaporator, and the residual liquid within the round-bottomed flask was filtered by suction filtration under reduced pressure, thus yielding the targeted DOE acrylate ester (yield: 240 g).

The sulfur content of the thus obtained DOE acrylate ester was measured by the standard sulfur fraction measurement method of combustion followed by coulometric titration (a vertical furnace coulometry method, conducted in accordance with ASTM D5808), using a measuring device manufactured by Dia Instruments Co., Ltd. The result revealed a sulfur content of 5 ppm, and the hue (APHA) was 10.

### Comparative Example 6

With the exception of replacing the raw material DOE with 59 g (0.5 mols) of 1,6-hexanediol, reaction was conducted using the same apparatus and conditions as the example 1.

The sulfur fraction within the obtained acrylate ester (yield: 101 g) was below the detection limit (1 ppm), and the hue (APHA) was 10.

### Comparative Example 7

With the exception of replacing the raw material DOE with 395 g (1 mol) of a 4 mol ethylene oxide adduct of nonylphenol, reaction was conducted using the same apparatus and conditions as the example 1.

The sulfur fraction within the obtained acrylate ester (yield: 404 g) was below the detection limit (1 ppm), and the hue (APHA) was 20.

### <Comparative Example 1>

A 1 liter flask fitted with a stirrer, a thermometer, an air inlet tube, a condenser, and a water removal device was charged with 194 g (1.0 mols) of DOE, 86.4 g (1.2 mols) of acrylic acid, 425 g of toluene, 16.0 g of para-toluenesulfonic acid, and 0.264 g of hydroquinone monomethyl ether. The mixture was heated under reduced pressure, while the air intake volume was set to 100 ml/minute.

The pressure was regulated to maintain the reaction temperature at 100°C, while the water produced in the reaction was removed, and every hour, a sample was removed from the reaction mixture and measured by gas chromatography to determine the reaction rate. Once the reaction rate had reached at least 97%, the reaction was halted and the reaction mixture was cooled.

When the temperature of the reaction liquid had fallen to no more than 40°C, 115 g of a 16% by weight saline solution was added, and the mixture was washed by stirring for 15 minutes. The mixture was then allowed to settle for 15 minutes, and the water layer was removed. Subsequently, 49 g of a 25% by weight aqueous solution of sodium hydroxide and 69 g of the 16% by weight saline solution were added, and the resulting mixture was stirred for 30 minutes. Stirring was then halted, the mixture was allowed to settle for 2 hours, and the water layer was removed. The pH of the water layer was 9. Subsequently, 115 g of the 16% by weight saline solution was added, and the mixture was stirred at 300 rpm for 30 minutes. The mixture was then allowed to settle for 1 hour, and the water layer was again removed. The pH of the water layer was within a range from 7 to 8.

Subsequently, the washed organic layer was transferred to a 1 liter round-bottomed flask, and the toluene was removed using a rotary evaporator. The residual liquid within the round-bottomed flask was filtered by suction filtration under reduced pressure, thus yielding the targeted DOE acrylate ester (yield: 210 g).

Measurement of the sulfur fraction of the thus obtained DOE acrylate ester revealed a result of 210 ppm, and the hue (APHA) was 150.

### <Comparative Example 2>

With the exception of replacing the raw material DOE with 59 g (0.5 mols) of 1,6-hexanediol, reaction was conducted using the same apparatus and conditions as the comparative example 1.

The sulfur fraction within the obtained acrylate ester (yield: 90 g) was 450 ppm, and the hue (APHA) was 200.

### <Comparative Example 3>

With the exception of replacing the raw material DOE with 395 g (1 mol) of a 4 mol ethylene oxide adduct of nonylphenol, reaction was conducted using the same apparatus and conditions as the comparative example 1.

The sulfur fraction within the obtained acrylate ester (yield: 359 g) was 180 ppm, and the hue (APHA) was 160.

The skin irritancy and the change in hue on storage for 1 month in a thermostatic chamber at 40°C were determined and compared for each of the acrylate esters obtained in the example and the comparative examples 1 to 3, 6 and 7. The results are shown in Table 1.

### Table 1

**Table 1. Results of Examples and Comparative Examples**

| Item | Initial hue | Hue after 1 month | Skin irritancy |
|---|---|---|---|
| | (APHA) | (APHA) | (PII) |
| Example 1 | 10 | 10 | 2.2 |
| Comparative Example 6 | 10 | 10 | 5 |
| Comparative Example 7 | 20 | 30 | 1.8 |
| Comparative example 1 | 150 | 500 | 3.7 |
| Comparative example 2 | 200 | 500 | 5.5 |
| Comparative example 3 | 160 | 400 | 2.7 |

### <Resin Compositions>

Using the blend ratios shown in Table 2, resin compositions were prepared using each of the acrylate esters obtained in the example 1 and the comparative examples 1 to 3, 6 and 7. Each resin composition was applied to the surface of a polycarbonate substrate using a #16 bar coater, in sufficient quantity to generate a film thickness of 20 µm, and the surface of the applied coating was then irradiated with 300 mJ/cm² of ultraviolet light (lamp output: 120 W/cm), thereby producing a cured product sample. Each of these samples was then allowed to stand for 24 hours at 90°C, and the change in hue of the cured product was determined. The results are shown in Table 2.

**Table 2**

| | | | | | | |
|---|---|---|---|---|---|---|
| Acrylate ester prepared in the example 1 | 30 | | | | | |
| Acrylate ester prepared in the comparative example 6 | | 30 | | | | |
| Acrylate ester prepared in the comparative example 7 | | | 30 | | | |
| Acrylate ester prepared in the comparative example 1 | | | | 30 | | |
| Acrylate ester prepared in the comparative example 2 | | | | | 30 | |
| Acrylate ester prepared in the comparative example 3 | | | | | | 30 |
| Aromatic urethane acrylate (UA937, manufactured by Nippon Kayaku Co., Ltd.) | 35 | 35 | 35 | 35 | 35 | 35 |
| Diacrylate of 4 mol ethylene oxide adduct of bisphenol A | 10 | 10 | 10 | 10 | 10 | 10 |
| Tricyclodecanedimethylol diacrylate | 20 | 20 | 20 | 20 | 20 | 20 |
| 1-hydroxycyclohexyl phenyl ketone | 0.7 | 0.7 | 0.7 | 0.7 | 0.7 | 0.7 |
| Coloration of cured product | A | A | A | C | C | C |

| | | | | | | |
|---|---|---|---|---|---|---|
| A: no coloration, B: some minor coloration, C: coloration The numbers in the Table all refer to parts by weight. | | | | | | |

### Comparative Example 8

With the exception of replacing the raw material DOE with 200 g of a polypropylene glycol (average molecular weight: 400), reaction was conducted using the same apparatus and conditions as the example 1.

The sulfur fraction within the obtained acrylate ester (yield: 231 g) was below the detection limit (1 ppm), and the hue (APHA) was 10.

### Comparative Example 9

With the exception of replacing the raw material DOE with 138 g of phenoxyethyl alcohol, reaction was conducted using the same apparatus and conditions as the example 1.

The sulfur fraction within the obtained acrylate ester (yield: 178 g) was below the detection limit (1 ppm), and the hue (APHA) was 10.

### <Comparative Example 4>

With the exception of replacing the raw material DOE with 200 g of a polypropylene glycol (average molecular weight: 400), reaction was conducted using the same apparatus and conditions as the comparative example 1.

The sulfur fraction within the obtained acrylate ester (yield: 215 g) was 120 ppm, and the hue (APHA) was 80.

### <Comparative Example 5>

With the exception of replacing the raw material DOE with 138 g of phenoxyethyl alcohol, reaction was conducted using the same apparatus and conditions as the comparative example 1.

The sulfur fraction within the obtained acrylate ester (yield: 154 g) was 150 ppm, and the hue (APHA) was 100.

Each of the acrylate esters obtained in the example 1 and the comparative examples 1, 4, 5, 8 and 9 was placed in a 50 mL polyethylene container, and test specimens of gold, silver, copper, aluminum, and iron were placed in each container. Each sample was then stored for 1 month in a thermostatic chamber at 40°C, any changes in the metal specimens were noted, and changes in the properties of the acrylate ester were compared with a blank sample containing no metal specimens. The results are shown in Table 3.

**Table 3**

| Item | Initial hue | Hue after 1 month | | | | | |
|---|---|---|---|---|---|---|---|
| | | [result in parentheses indicates the presence or absence of corrosion] | | | | | |
| | (APHA) | Blank | Gold | Silver | Copper | Aluminum | Iron |
| Example 1 | 10 | 10 | 10 (no) | 10 (no) | 10 (no) | 10 (no) | 10 (no) |
| Comparative Example 8 | 10 | 10 | 10 (no) | 10 (no) | 10 (no) | 10 (no) | 10 (no) |
| Comparative Example 9 | 10 | 10 | 10 (no) | 10 (no) | 10 (no) | 10 (no) | 10 (no) |
| Comparative example 1 | 150 | 500 | 500 (yes) | 500 (yes) | 500 (yes) | 500 (yes) | 500 (yes) |
| Comparative example 4 | 80 | 200 | 200 (no) | 300 (yes) | 300 (yes) | 400 (yes) | 400 (yes) |
| Comparative example 5 | 100 | 300 | 300 (no) | 300 (yes) | 400 (yes) | 400 (yes) | 500 (yes) |

The present disclosure relates to subject matter contained in Japanese Patent Application No. 2004-279255, fled on September 27, 2004 and Japanese Patent Application No. 2004-279256, filed on September 27, 2004, the disclosure of which is expressly incorporated herein by reference in its entirety.

## Claims

1. A manufacturing method of a (meth)acrylate ester with a sulfur content of no more than 5 ppm, comprising:
preparing an alcohol and a lower (meth)acrylate ester; and
subjecting the alcohol and the lower (meth)acrylate ester to a transesterification reaction in the presence of a non-sulfonic acid-based catalyst,
wherein the alcohol comprises a tricyclo[5.2.1.0^{2,6}] decenyl group.

2. A (meth)acrylate ester with a sulfur content of no more than 5 ppm, produced by the manufacturing method according to claim 1 and containing a tricyclo[5.2.1.0^{2,6}]decenyl group.

3. A photocurable resin composition comprising the (meth)acrylate ester according to claim 2.

4. Use of the photocurable resin composition according to claim 3 as a coating material or an adhesive.

5. Use of the photocurable resin composition according to claim 3 or 4, as an adhesive layer or a protective layer formed on top of a metal layer of an optical disk.

6. An optical disk comprising an optical disk substrate, a metal layer, and an adhesive layer or a protective layer formed on top of the metal layer using the photocurable resin composition according to claim 3.

## Patentansprüche

1. Verfahren zur Herstellung eines (Meth)acrylatesters mit einem Schwefelgehalt von nicht mehr als 5 ppm, umfassend:
Herstellen eines Alkohols und eines niederen (Meth)acrylatesters; und
Umsetzen des Alkohols und des niederen (Meth)acrylatesters in einer Umesterungsreaktion in Gegenwart eines nicht-Sulfonsäure-basierten Katalysators,
wobei der Alkohol eine Tricyclo[5.2.1.0^{2,6}]decenylgruppe umfasst.

2. (Meth)acrylatester mit einem Schwefelgehalt von nicht mehr als 5 ppm, erhältlich gemäß dem Herstellungsverfahren gemäß Anspruch 1 und enthaltend eine Tricyclo[5.2.1.0^{2,6}]decenylgruppe.

3. Fotohärtbare Harzzusammensetzung, umfassend den (Meth)acrylatester gemäß Anspruch 2.

4. Verwendung der fotohärtbaren Harzzusammensetzung gemäß Anspruch 3, als Beschichtungsmaterial oder Klebemittel.

5. Verwendung der fotohärtbaren Harzzusammensetzung gemäß Anspruch 3 oder 4 als Klebemittelschicht oder Schutzschicht, die auf einer Metallschicht einer optischen Disk gebildet ist.

6. Optische Disk, umfassend ein optisches Disk-Substrat, eine Metallschicht und eine Klebemittelschicht oder eine Schutzschicht, die auf der Metallschicht unter Verwendung der fotohärtbaren Harzzusammensetzung gemäß Anspruch 3 gebildet ist.

## Revendications

1. Une méthode de fabrication d'un ester méth(acrylate) avec une teneur en soufre de pas plus de 5 ppm, comprenant :
- la préparation d'un alcool et d'un ester méth(acrylate) inférieur ; et
- la soumission de l'alcool et de l'ester méth(acrylate) inférieur à une réaction de transesterification en présence d'un catalyseur non basé sur un acide sulfonique,
dans laquelle l'alcool comprend un groupe tricyclo [5.2.1.0 ^{2,6}] décényle.

2. Un ester méth(acrylate) avec une teneur en soufre de pas plus de 5 ppm , produit par la méthode de fabrication selon la revendication 1 et contenant un groupe tricyclo [5.2.1.0 ^{2,6}] décényle.

3. Une composition de résine photoréticulable comprenant l' ester méth(acrylate) selon la revendication 2.

4. Utilisation de la composition de résine photoréticulable selon la revendication 3 comme matériau de revêtement ou adhésif.

5. Utilisation de la composition de résine photoréticulable selon la revendication 3 ou 4, comme couche adhésive ou couche protectrice formée au dessus d'une couche de métal d'un disque optique.

6. Un disque optique comprenant un substrat de disque optique, une couche de métal, et une couche adhésive ou couche protectrice formée au dessus de la couche de métal en utilisant la composition de résine photoréticulable selon la revendication 3.
